# EUROPÄISCHE PATENTSCHRIFT

(11) **EP 3 964 423 B1**
(45) Veröffentlichungstag und Bekanntmachung des Hinweises auf die Patenterteilung: **26.07.2023**
(21) Anmeldenummer: 21187692.5
(22) Anmeldetag: 26.07.2021
(51) Int. Cl.: B62B 3/16, B62B 3/00, B62B 5/00

(54) **ROLLWAGEN ZUR AUFNAHME EINES ODER MEHRERER TRANSPORTBEHÄLTER**
TROLLEY FOR RECEIVING ONE OR MORE TRANSPORT CONTAINERS
CHARIOT PERMETTANT DE RECEVOIR AU MOINS UN RÉCIPIENT DE TRANSPORT

(30) Priorität: 08.09.2020 DE 202020105166 U
(43) Veröffentlichungstag der Anmeldung: 09.03.2022
(73) Patentinhaber: FEIL rolltainer GmbH, 59602 Rüthen (DE)
(72) Erfinder: BIEHL, Waldemar, 59581 Warstein (DE)
(74) Vertreter: Andrejewski - Honke Patent- und Rechtsanwälte Partnerschaft mbB

(56) Entgegenhaltungen:
- EP-A1- 1 762 456
- EP-A1- 3 546 315
- DE-U1- 9 413 355
- JP-A- H0 986 415
- JP-A- 2000 177 594

## Beschreibung

Die Erfindung betrifft einen Rollwagen, insbesondere einen Transportrollwagen zur Aufnahme eines oder mehrerer Transportbehälter, mit einer Bodenplatte aus Kunststoff, ferner mit mehreren unterseitig an die Bodenplatte angeschlossenen Rollen, und mit zumindest einer oberseitigen Stapelmulde zur Aufnahme wenigstens einer Rolle eines oberseitig auf die Bodenplatte aufgesetzten weiteren Rollwagens, wobei die Stapelmulde zumindest eine Entwässerungsöffnung aufweist.

Solche Rollwagen werden in der Logistik und insbesondere Lebensmittelindustrie eingesetzt. Mit ihrer Hilfe werden Waren typischerweise zwischen Groß- und Einzelhandel versandt. Dazu lassen sich auf der Bodenplatte oberseitig beispielsweise zusammenklappbare Transportbehälter platzieren. Die Transportbehälter dienen ihrerseits zur Aufnahme von Lebensmitteln aber auch von Maschinenteilen. Solche Transportbehälter werden beispielsweise in der WO 00/68099 A1 beschrieben.

Nach Entnahme der Lebensmittel bzw. Maschinenteile können die zusammenklappbaren Transportbehälter wiederverwendet werden. Gleiches gilt für die Rollwagen. Damit diese möglichst kompakt gesammelt und transportiert werden können, werden die Rollwagen aufeinander gestapelt. Dadurch lassen sich Säulen von mehreren Rollwagen bilden. Zu diesem Zweck greift die jeweilige Rolle eines Rollwagens in die unterseitig darunter vorhandene Stapelmulde des darunter befindlichen weiteren Rollwagens ein. Solche Rollwagen sind aus der Praxis in vielfältiger Gestaltung bekannt.

Darüber hinaus kennt man im Schrifttum derartige Rollwagen, wozu auf die DE 20 2019 003 291 U1 oder auf die DE 693 02 485 T2 hingewiesen sei. Andere Rollwagen i. V. m. einem Transportgestell sind Gegenstand der auf die Anmelderin zurückgehenden EP 1 762 456 A1.

Die bekannten Rollwagen haben sich grundsätzlich bewährt, bieten allerdings noch Raum für Verbesserungen. Tatsächlich gibt es neben Rollwagen mit beispielsweise vier unterseitig an die Bodenplatte angeschlossenen Rollen sogenannte Fleischereiwagen bzw. Rollwagen zur Verwendung in Fleischereien bzw. im Zusammenhang mit dem Transport von Fleisch, Fleischabfällen usw. Solche Rollwagen verfügen aufgrund des erhöhten zu transportierenden Gewichtes oftmals nicht über vier unterseitig an die Bodenplatte angeschlossene Rollen, sondern vielmehr sechs Rollen oder noch mehr. Dabei sind die an dieser Stelle realisierten wenigstens drei Rollenpaare typischerweise als Bockrollen ausgebildet. Dadurch besteht die Möglichkeit, die mittleren Bockrollen als gleichsam Drehachse einzusetzen, sodass solche Rollwagen auf der Stelle um praktisch jeden beliebigen Winkel insbesondere um 180° oder sogar 360° gedreht werden können. Das hat sich grundsätzlich bewährt.

Bei Rollwagen des eingangs beschriebenen Aufbaus und zur Verwendung in der Lebensmittelindustrie ist eine Reinigung nach dem Gebrauch vor dem Wiederbefüllen mit beispielsweise einem oder mehreren Transportbehältern obligatorisch. Damit eine optimale Reinigung gelingt und insbesondere die strengen Hygienevorschriften im Lebensmittelbereich erfüllt werden, müssen Feuchtigkeitsansammlungen vermieden werden. Das setzt eine einwandfreie Entwässerung der Bodenplatte aus Kunststoff und auch der unterseitigen Rollen voraus.

Beim gattungsbildenden und insofern nächstkommenden Stand der Technik nach der JP 2000177594 A geht es um einen Rollwagen, welcher bereits mit zwei sich gegenüberliegenden Entwässerungsöffnungen in einer Stapelmulde ausgerüstet ist. Die betreffende Stapelmulde eines darunter befindlichen Rollwagens nimmt folgerichtig die Rolle des betreffenden Rollwagens auf, sodass die Rolle hierdurch mit Feuchtigkeit benetzt werden kann.

Vergleichbares gilt, wenn man den weiteren Stand der Technik nach der DE 94 13 355 U1 betrachtet. Hier geht es um einen stapelbaren Rolli insbesondere für die Lebensmittelindustrie. Auch in diesem Fall besteht die Gefahr, dass über Flüssigkeitsablauföffnungen in der Stapelmulde eine darunter befindliche Rolle benetzt wird. Beim anschließenden stimmungsgemäßen Gebrauch nimmt die fragliche Rolle hierdurch Staub und Dreck einer Bodenfläche auf.

Die schließlich noch zu berücksichtigende JP H09 86415 A betrifft einen Rollcontainer der für die Stapelbarkeit auf eine durchlaufende Längsvertiefung als Stapelmulde zurückgreift. Zusätzliche Entwässerungsöffnungen sind nicht vorgesehen.

Die an dieser Stelle in der Praxis eingesetzten und im Schrifttum beschriebenen Rollwagen sind verbesserungsbedürftig, weil sich aufgrund des teilweise zerklüfteten Aufbaus sogenannte Wassernester bilden können. Das gilt auch und insbesondere im Bereich der oberseitigen Stapelmulde. Solche Wassernester müssen in jedem Fall vermieden werden, weil sich hierin Keime oder allgemein Verunreinigungen anlagern können, die auch dann noch vorhanden sind, wenn das Wasser in der Zwischenzeit verdunstet ist. Hier will die Erfindung insgesamt Abhilfe schaffen.

Der Erfindung liegt das technische Problem zugrunde, einen derartigen Rollwagen und insbesondere Transportrollwagen zur Aufnahme eines oder mehrerer Transportbehälter so weiterzuentwickeln, dass die strengen Hygieneanforderungen insbesondere im Lebensmittelbereich erfüllt werden und dauerhafte Verschmutzungen vermieden werden.

Zur Lösung dieser technischen Problemstellung schlägt die Erfindung gemäß Anspruch 1 bei einem gattungsgemäßen Rollwagen und insbesondere Transportrollwagen zur Aufnahme eines oder mehrerer Transportbehälter vor, dass die Stapelmulde als über nahezu die gesamte Breitseite der Bodenplatte verlaufende Längsvertiefung ausgebildet ist, wobei die Stapelmulde mit zwei beidseitig einer Stützfläche angeordneten Entwässerungsöffnungen ausgerüstet ist.

Erfindungsgemäß verfügt also die oberseitige Stapelmulde bzw. die mehreren Stapelmulden in respektive an der Oberseite der Bodenplatte über je zwei Entwässerungsöffnungen. Diese Entwässerungsöffnungen öffnen sich in der Regel zur Unterseite der Bodenplatte hin, sodass von vornherein und erfindungsgemäß eine etwaige Flüssigkeits- und Wasseransammlung im Innern der Stapelmulde zuverlässig vermieden wird.

Zu diesem Zweck ist die Stapelmulde erfindungsgemäß als über nahezu die gesamte Breitseite der Bodenplatte verlaufende Längsvertiefung ausgebildet.

Hierbei geht die Erfindung zunächst einmal von der Erkenntnis aus, dass die Bodenplatte und folglich der Rollwagen typischerweise rechteckig ausgebildet ist. Meistens verfügt ein solcher Rollwagen über die Abmessungen 400 mm x 600 mm, ist also von der Größe her an eine sogenannte Halbpalette angepasst bzw. entspricht dieser. Als Folge hiervon sind die Rollen jeweils an der Breitseite der Bodenplatte unterseitig angeordnet. Die Erfindung greift nun nicht auf jeweils separate Stapelmulden für jede einzelne Rolle an der fraglichen Breitseite der Bodenplatte zurück. Vielmehr ist eine praktisch durchgängige Stapelmulde in Gestalt der nahezu über die gesamte Breitseite der Bodenplatte verlaufenden Längsvertiefung vorgesehen und realisiert. Dadurch finden sämtliche entlang dieser Breitseite der Bodenplatte angeordnete Rollen eine Anordnung in der als über die gesamte Breitseite der Bodenplatte verlaufende Längsvertiefung ausgebildeten Stapelmulde eines darunter befindlichen Rollwagens.

Erfindungsgemäß ist die fragliche Stapelmulde mit zwei Entwässerungsöffnungen ausgerüstet. Dabei ist die Auslegung zusätzlich noch so getroffen, dass die beiden Entwässerungsöffnungen beidseitig der Stützfläche vorzugsweise für eine mittige Rolle angeordnet sind. Außerdem verfügt die Stapelmulde vorteilhaft in Richtung auf die Entwässerungsöffnungen respektive in Richtung auf die jeweilige Entwässerungsöffnung zumindest über eine Gefällestrecke.

In der Regel sind mehrere Gefällestrecken vorgesehen, damit ausgehend von der Stützfläche jeweils über die korrespondierende Gefällestrecke etwaiges auf bzw. in der Stützfläche vorhandenes Wasser beispielsweise beidseitig der Stützfläche zuverlässig in Richtung auf die zugehörige Entwässerungsöffnung abgeführt wird.

Hierbei geht die Erfindung zusätzlich noch von der Erkenntnis aus, dass in der Regel insgesamt wenigstens drei Rollenpaare unterseitig an die Bodenplatte angeschlossen sind. Die drei Rollenpaare sind dabei sämtlich als Bockrollen ausgebildet. Dabei wird zusätzlich noch so vorgegangen, dass die mittleren Bockrollen einen größeren Abstand ihrer zugehörigen Lauffläche zur Unterseite der Bodenplatte als die beiden seitlichen Bockrollen aufweisen. Außerdem ist die Auslegung so getroffen, dass sich die mittleren Bockrollen jeweils auf der Stützfläche der Stapelmulde eines darunter befindlichen Rollwagens in gestapeltem Zustand abstützen. Die seitlichen Bockrollen finden dagegen eine Abstützung innerhalb der Stapelmulde auf weiteren Stützflächen respektive zusätzlich vorgesehenen Muldenflächen innerhalb der Stapelmulde bzw. der an dieser Stelle realisierten und in Längsrichtung verlaufenden Längsvertiefung.

Tatsächlich wird man meistens so vorgehen, dass die fragliche Längsvertiefung zumindest eine Muldenfläche aufweist oder auch mit wenigstens zwei Muldenflächen ausgerüstet ist, um eine einwandfreie Positionierung der sämtlichen Rollen innerhalb der Längsvertiefung in gestapeltem Zustand der Rollwagen zur Verfügung zu stellen. Dabei ist zusätzlich die Auslegung so getroffen, dass die Muldenfläche innerhalb der Längsvertiefung zusätzlich mit einer Gefällestrecke kommuniziert, die in Richtung auf eine zugehörige Entwässerungsöffnung verläuft, sodass auch im Bereich der Muldenfläche etwaiges stehendes oder verbliebenes Wasser nach beispielsweise einem Reinigungsprozess einwandfrei über die Gefällestrecke und anschließend die Entwässerungsöffnung oder die mehreren Entwässerungsöffnungen abgeführt wird.

Um die Reinigung des erfindungsgemäßen Rollwagens besonders wirksam und ohne Rückstände durchführen zu können, ist die Bodenplatte vorteilhaft unterseitig mithilfe einer Unterbodenplatte verschlossen. Die Bodenplatte und die Unterbodenplatte sind dabei in der Regel miteinander verschweißt. Hier schlägt die Erfindung vor, dass die beiden Platten durch einen sogenannten Spiegelschweißvorgang miteinander vereinigt sind. Bei einem solchen Spiegelschweißvorgang wird so vorgegangen, dass die beiden zu verbindenden Platten, d. h. die Bodenplatte und die Unterbodenplatte, beidseitig an einen beheizten und zwischen sie eingefahrenen Spiegel angelegt werden. Dadurch schmelzen zumindest die Ränder der beiden miteinander zu verbindenden Platten, sodass nach Entfernen des Spiegels die beiden Platten wunschgemäß miteinander vereinigt werden.

Die Bodenplatte ist ebenso wie die Unterbodenplatte als Kunststoffspritzgussteil ausgeführt. Dabei kann auf typische thermoplastische Kunststoffe wie PE (Polyethylen) oder auch PP (Polypropylen) ebenso wie auf PA (Polyamid) zurückgegriffen werden. Auch Mischformen sind denkbar. Ebenso ist es möglich, den Kunststoff mit eingelagerten Fasern, insbesondere Glasfasern zu verstärken.

Durch die vorteilhafte Realisierung von insgesamt drei Rollenpaaren, die darüber hinaus jeweils als Bockrollen ausgebildet sind, eignet sich der erfindungsgemäße Rollwagen auch und insbesondere zum Transport schwerer Lebensmittel wie beispielsweise von Transportbehältern, die mit Fleisch befüllt sind. Solche Rollwagen für die Fleischerei bzw. Fleischereibetriebe werden in der Regel so bewegt, dass das mittlere Rollenpaar und eines der beiden seitlichen Rollenpaare zusammengenommen eine rollende Abstützung zur Verfügung stellen. D. h., an dieser Stelle bleibt das weitere seitliche Rollenpaar "in der Luft", weil der größere Abstand der Lauffläche der mittleren Bockrollen zur Unterseite der Bodenplatte dafür sorgt, dass bei diesem Vorgang der Rollwagen gleichsam zu einer oder zur anderen Seite "gekippt" wird. Diese Vorgehensweise hat den weiteren Vorteil, dass der Rollwagen trotz der an dieser Stelle realisierten Bockrollen praktisch auf der Stelle gedreht werden kann, indem die mittleren Bockrollen einen Kreis beschreiben. Dadurch ist der fragliche Rollwagen nicht nur stabil, sondern auch besonders funktionsgerecht ausgebildet.

In Verbindung mit der praktisch komplett dichten Auslegung durch den Rückgriff auf die Bodenplatte und die Unterbodenplatte, die miteinander verschweißt sind in Verbindung mit. den zusätzlich vorgesehenen Entwässerungsöffnungen in der Stapelmulde ebenso wie den eckseitigen Entwässerungsöffnungen des Umlaufrandes wird eine insgesamt glattflächige Oberfläche des Rollwagens zur Verfügung gestellt, die ausdrücklich etwaige Nester zur Schmutzansammlung vermeidet. Denn der optimierte Wasserablauf verhindert solche Schmutzansammlungen. Dadurch ist der erfindungsgemäße Rollwagen für Anwendungen in der Lebensmittelindustrie und zur zusätzlich turnusgemäßen Reinigung prädestiniert.

Im Folgenden wird die Erfindung anhand einer lediglich ein Ausführungsbeispiel darstellenden Zeichnung näher erläutert; es zeigen:
- Fig. 1: den erfindungsgemäßen Rollwagen in einer perspektivischen Ansicht in gestapeltem Zustand,

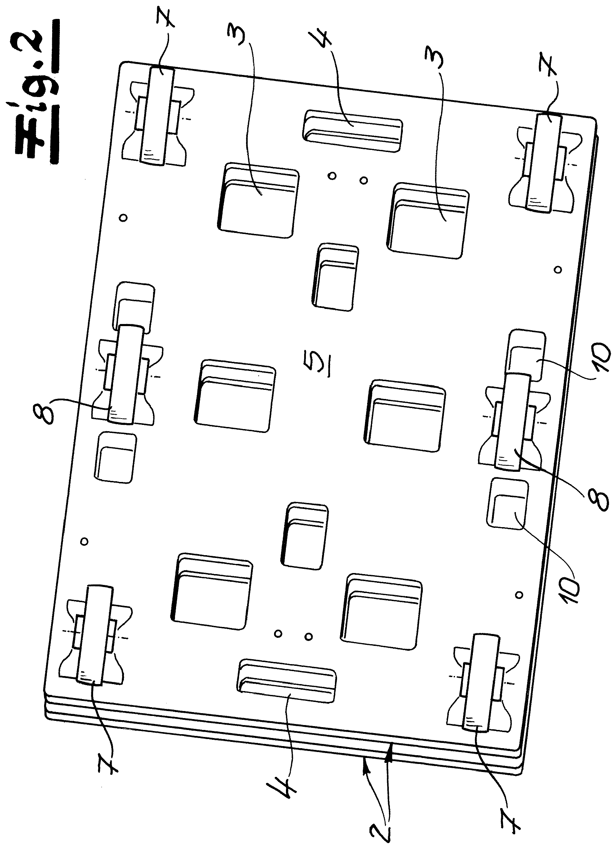

- Fig. 2: eine Ansicht auf den Rollwagen von unten und

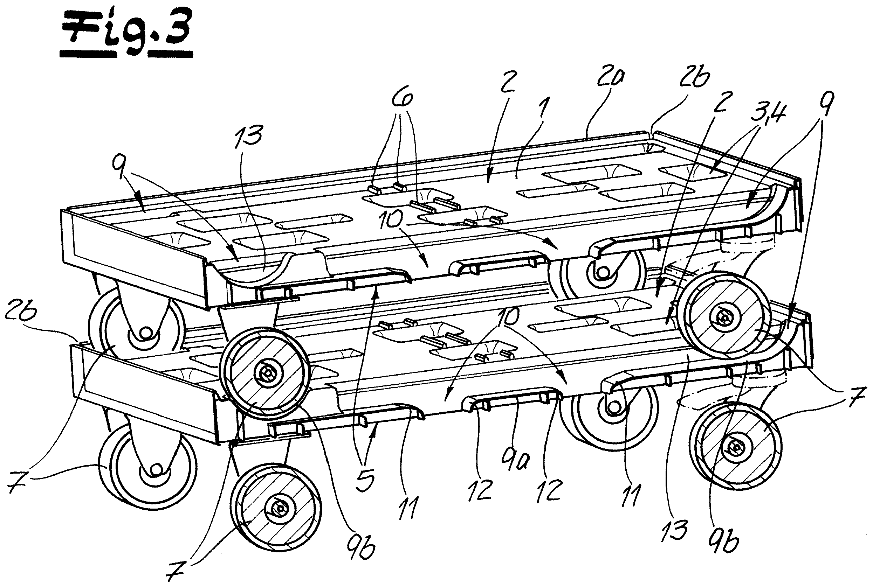

- Fig. 3: den Rollwagen in abgewandelter Ausführungsform teilweise mit seitlich aufgebrochenem Rand.

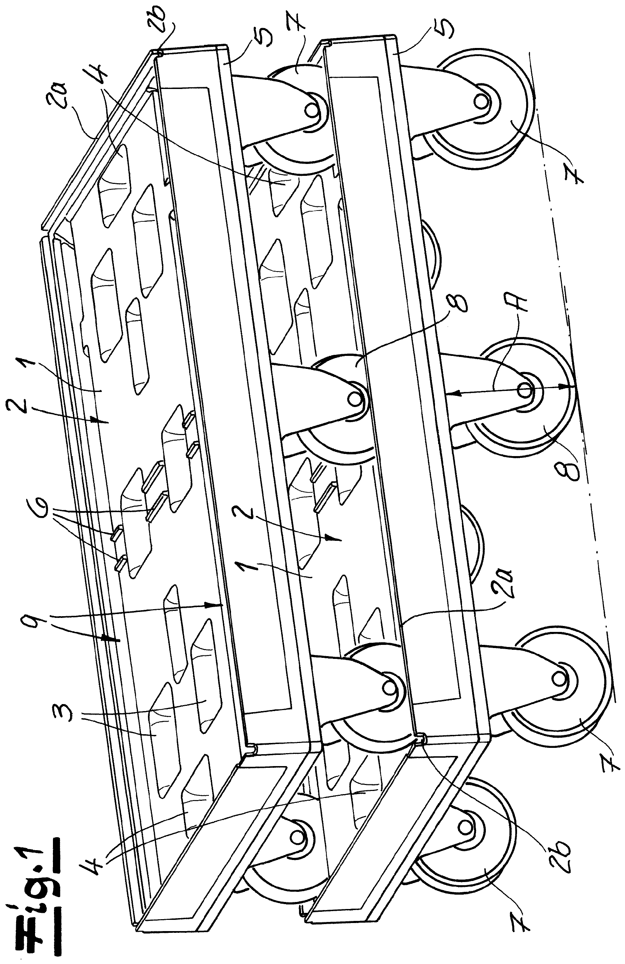

In den Figuren ist ein Rollwagen dargestellt, bei dem es sich um einen Transportrollwagen zur Aufnahme eines oder mehrerer Transportbehälter handelt. Dazu werden die Transportbehälter auf der Oberseite 1 einer Bodenplatte 2 aus Kunststoff abgestellt. Die Bodenplatte 2 aus Kunststoff ist zu diesem Zweck mit einem Umlaufrand 2a mit eckseitigen Entwässerungsöffnungen 2b ausgerüstet. Tatsächlich ist die Oberseite 1 der Bodenplatte 2 aus Kunststoff glattflächig ausgelegt, und zwar bis auf mehrere Öffnungen 3, 4. Bei diesen Öffnungen 3, 4 handelt es sich einerseits um Öffnungen zur Gewichtsreduktion und andererseits um Grifföffnungen 4, mit deren Hilfe Bedienpersonal den Rollwagen manipulieren kann, beispielsweise in eine stapelnde Anordnung entsprechend der Darstellung in der Fig. 1 zu überführen in der Lage ist.

Die Bodenplatte 2 aus Kunststoff ist darüber hinaus mit einer Unterseite 5 ausgerüstet. Tatsächlich wird die Unterseite 5 nach dem Ausführungsbeispiel von einer Unterbodenplatte 5 gebildet. Die Unterbodenplatte 5 ist mit der Bodenplatte 2 verschweißt, nach dem Ausführungsbeispiel durch einen Spiegelschweißvorgang der beiden Platten 2, 5 mit der Bodenplatte 2 dicht verbunden. Dadurch kann bei einem Reinigungsvorgang des Rollwagens kein Wasser ins Innere der Bodenplatte 2 eindringen. Ebenso wie die Bodenplatte 2 so ist auch die Unterbodenplatte 5 insgesamt glattflächig ausgerüstet und verfügt lediglich über die zuvor bereits angesprochenen Öffnungen 3, 4, die sich ausgehend von der Oberseite 1 der Bodenplatte 2 bis hin zur Unterseite bzw. der Unterbodenplatte 5 fortsetzen. Das führt nicht nur zur Gewichtsersparnis, sondern stellt zusätzlich auch sicher, dass beim Reinigungsvorgang etwaiges auf der Oberseite 1 der Bodenplatte 2 verbleibendes Wasser über die fraglichen Öffnungen 3, 4 abfließen kann. Das gilt auch für die eckseitigen Entwässerungsöffnungen 2b im Umlaufrand 2a.

Wie bereits erläutert, dient die Bodenplatte 2 mit ihrer Oberseite 1 zur Aufnahme einer oder mehrerer nicht näher dargestellter Transportbehälter. Bei diesen Transportbehältern mag es sich um Ladegutbehälter handeln, die zusammengeklappt und aufgerichtet werden können, wie dies in der WO 00/68099 A1 im Detail beschrieben wird. Zusätzlich sind noch weitere Fixieranschläge 6 auf der Oberseite 1 der Bodenplatte 2 für die fraglichen Transportbehälter vorgesehen, die jedoch grundsätzlich auch entfallen können.

Man erkennt, dass der dargestellte Rollwagen mit mehreren unterseitig an die Bodenplatte 2 angeschlossenen Rollen 7, 8 ausgerüstet ist. Tatsächlich werden die Rollen 7, 8 nach dem Ausführungsbeispiel an der Unterbodenplatte 5 festgelegt, und zwar mit beispielsweise Schrauben, die die Unterbodenplatte 5 durchgreifen und in nicht näher dargestellte Befestigungsdome als Bestandteil einer Verrippung der Bodenplatte 2 eingreifen. Bei den Rollen 7, 8 handelt es sich im Ausführungsbeispiel und nicht einschränkend durchgängig um Bockrollen, also Rollen, die starr sind und keine Lenk- bzw. Drehbewegungen ermöglichen.

Tatsächlich sind nach dem Ausführungsbeispiel insgesamt drei Rollenpaare 7, 8 realisiert. Dabei ist das mittlere Rollenpaar bzw. sind die mittleren Bockrollen 8 mit einem größeren Abstand A ihrer Lauffläche zur Unterseite 5 bzw. zur Unterbodenplatte 5 der Bodenplatte 2 ausgerüstet im Vergleich zu den beiden seitlichen Bockrollen 7. Das wird anhand der Darstellung in der Fig. 1 deutlich. Auf diese Weise wird der beladene Rollwagen zum Zwecke des Transportes entweder mithilfe der beiden vorderen Bockrollen 7 und der mittleren Bockrollen 8 oder alternativ mithilfe der hinteren Bockrollen 7 und der mittleren Bockrollen 8 transportiert. Der Wechsel zwischen diesen beiden Transportpositionen korrespondiert dabei zu einer "Kippbewegung" des Rollwagens um die beiden mittleren Bockrollen 8. Außerdem besteht hierdurch die Möglichkeit, dass der Rollwagen um die beiden mittleren Bockrollen 8 auf der Stelle gedreht werden kann.

Der Rollwagen verfügt darüber hinaus über zwei oberseitige Stapelmulden 9, die nach dem Ausführungsbeispiel und erfindungsgemäß jeweils als über nahezu die gesamte Breitseite der Bodenplatte 2 verlaufende Längsvertiefungen ausgebildet sind. Darüber hinaus verfügt die jeweilige Stapelmulde 9 über zwei Entwässerungsöffnungen 10.

Tatsächlich ist die Bodenplatte 2 und mithin der gesamte Rollwagen rechteckig ausgebildet, wobei die Breitseite mit der Längsseite zusammenfällt und folglich mit derjenigen Seite der Bodenplatte 2, längs derer sich die beiden Stapelmulden 9 jeweils randseitig erstrecken. Durch die Realisierung der jeweiligen Stapelmulde 9 können die Rollen 7, 8 eines aufgesetzten Rollwagens in den Stapelmulden 9 aufgenommen werden. Erfindungsgemäß verfügt die Stapelmulde 9 über zwei Entwässerungsöffnungen 10. Tatsächlich sind nach dem Ausführungsbeispiel zwei Entwässerungsöffnungen 10 realisiert, die beidseitig einer Stützfläche 9a angeordnet sind. Die Stützfläche 9a dient dabei zur Abstützung der mittleren Bockrollen 8 des in gestapeltem Zustand aufgesetzten weiteren Rollwagens. Demgegenüber sind zwei zusätzlich vorgesehene Muldenflächen 9b jeweils endseitig der Stapelmulde 9 realisiert, die die seitlichen Bockrollen 7 aufnehmen.

Man erkennt, dass die beiden Muldenflächen 9b zum jeweiligen Rand der Bodenplatte 2 bzw. zu ihrer Schmalseite hin jeweils hochgezogen sind, sodass die hierin aufgenommene Bockrolle 7 des abgesetzten Rollwagens in axialer Richtung bzw. Längsrichtung zentriert wird. Außerdem ist die Auslegung so getroffen, dass die Stapelmulde 9 in Richtung auf die jeweilige Entwässerungsöffnung 10 eine Gefällestrecke 11, 12 aufweist. Tatsächlich sind an dieser Stelle zwei endseitige Gefällestrecken 11 am Ende der jeweiligen Muldenfläche 9b realisiert und darüber hinaus zwei endseitige Gefällestrecken 12 jeweils endseitig der mittigen Stützfläche 9a. Auf diese Weise werden die einzelnen Muldenflächen 9b ebenso wie die mittige Stützfläche 9a jeweils in Richtung auf die Entwässerungsöffnungen 10 einwandfrei entwässert, sodass sich insgesamt in der erfindungsgemäßen Stapelmulde 9 kein Wasser und damit auch keine Verschmutzungen ansammeln können.

Die Muldenfläche 9b ist darüber hinaus mit einem seitlichen Anschlag 13 ausgerüstet, sodass in Verbindung mit dem in Richtung auf die Schmalseite der Bodenplatte 2 jeweils hochgezogenen Rand der Muldenfläche 9b die hierin jeweils aufgenommene Rolle 7 nicht nur in Axialrichtung bzw. Längsrichtung, sondern auch senkrecht hierzu in Richtung der Schmalseite der Bodenplatte 2 (Querrichtung) gesichert wird. Dadurch lässt sich ein einwandfreier Stapel aus den einzelnen Rollwagen herstellen, indem die einzelnen Rollen 7, 8 jeweils nestend in die Stapelmulde 9 des darunter befindlichen Rollwagens eingreifen.

## Patentansprüche

1. Rollwagen, insbesondere Transportrollwagen zur Aufnahme eines oder mehrerer Transportbehälter, mit einer Bodenplatte (2) aus Kunststoff, ferner mit mehreren unterseitig an die Bodenplatte (2) angeschlossenen Rollen (7, 8), und mit zumindest einer oberseitigen Stapelmulde (9) zur Aufnahme wenigstens einer Rolle (7, 8) eines oberseitig auf die Bodenplatte (2) aufgesetzten weiteren Rollwagens, wobei die Stapelmulde (9) zumindest eine Entwässerungsöffnung (10) aufweist,
**dadurch gekennzeichnet, dass**
die Stapelmulde (9) als über nahezu die gesamte Breitseite der Bodenplatte (2) verlaufende Längsvertiefung ausgebildet ist, wobei (9a) die Stapelmulde (9) mit zwei beidseitig einer Stützfläche angeordneten Entwässerungsöffnungen (10) ausgerüstet ist.

2. Rollwagen nach Anspruch 1, **dadurch gekennzeichnet**, die Stützfläche (9a) für eine mittige Rolle (8) dient.

3. Rollwagen nach einem der Ansprüche 1 oder 2, **dadurch gekennzeichnet, dass** die Stapelmulde (9) in Richtung auf die Entwässerungsöffnung (10) zumindest eine Gefällestrecke (11, 12) aufweist.

4. Rollwagen nach Anspruch 3, **dadurch gekennzeichnet, dass** mehrere Gefällestrecken (11, 12) vorgesehen sind.

5. Rollwagen nach einem der Ansprüche 1 bis 4, **dadurch gekennzeichnet, dass** die Bodenplatte (2) unterseitig mithilfe einer Unterbodenplatte (5) verschlossen ist.

6. Rollwagen nach Anspruch 5, **dadurch gekennzeichnet, dass** die Bodenplatte (2) und die Unterbodenplatte (5) miteinander verschweißt sind.

7. Rollwagen nach Anspruch 6, **dadurch gekennzeichnet, dass** beide Platten (2, 5) durch einen Spiegelschweißvorgang miteinander vereinigt sind.

8. Rollwagen nach einem der Ansprüche 1 bis 7, **dadurch gekennzeichnet, dass** insgesamt zumindest drei Rollenpaare (7, 8) unterseitig an die Bodenplatte (2) angeschlossen sind.

9. Rollwagen nach Anspruch 8, **dadurch gekennzeichnet, dass** die drei Rollenpaare (7, 8) sämtlich als Bockrollen ausgebildet sind.

10. Rollwagen nach Anspruch 8 oder 9, **dadurch gekennzeichnet, dass** die mittleren Bockrollen (8) einen größeren Abstand (A) ihrer Lauffläche zur Unterseite (5) der Bodenplatte (2) als die beiden seitlichen Bockrollen (7) aufweisen.

11. Rollwagen nach einem der Ansprüche 8 bis 10, **dadurch gekennzeichnet, dass** sich die mittleren Bockrollen (8) jeweils auf der Stützfläche (9a) der Stapelmulde (9) abstützen.

12. Rollwagen nach einem der Ansprüche 1 bis 11, **dadurch gekennzeichnet, dass** die Bodenplatte (2) auf ihrer Oberseite (1) einen Umlaufrand (2a) als Fixieranschlag für den/die Transportbehälter aufweist.

13. Rollwagen nach Anspruch 12, **dadurch gekennzeichnet, dass** der Umlaufrand (2a) mit eckseitigen Entwässerungsöffnungen (2b) ausgerüstet ist.

## Claims

1. A trolley, in particular a transport trolley for receiving one or more transport containers, having a baseplate (2) consisting of plastic, also having multiple castors (7, 8) which are connected to the underside of the baseplate (2), and having at least one stacking trough (9) on the top for receiving at least one castor (7, 8) of a further trolley placed on the top of the baseplate (2), wherein the stacking trough (9) has at least one drainage opening (10),
**characterised in that**
the stacking trough (9) is designed as a longitudinal depression running over virtually the entire wide side of the baseplate (2), wherein the stacking trough (9) is equipped with two drainage openings (10) arranged on both sides of a supporting face (9a).

2. The trolley according to Claim 1, **characterised in that** the supporting face (9a) is used for a central castor (8) .

3. The trolley according to either of Claims 1 or 2, **characterised in that** the stacking trough (9) has at least one sloping section (11, 12) towards the drainage opening (10).

4. The trolley according to Claim 3, **characterised in that** multiple sloping sections (11, 12) are provided.

5. The trolley according to any one of Claims 1 to 4, **characterised in that** the baseplate (2) is closed at the bottom with the aid of a bottom plate (5).

6. The trolley according to Claim 5, **characterised in that** the baseplate (2) and the bottom plate (5) are welded to one another.

7. The trolley according to Claim 6, **characterised in that** both plates (2, 5) are joined to one another by a hotplate welding process.

8. The trolley according to any one of Claims 1 to 7, **characterised in that** at least three pairs of castors (7, 8) in total are connected to the underside of the baseplate (2).

9. The trolley according to Claim 8, **characterised in that** the three pairs of castors (7, 8) are all designed as fixed castors.

10. The trolley according to Claim 8 or 9, **characterised in that** the middle fixed castors (8) have a greater distance (A) between their running face and the underside (5) of the baseplate (2) than the two lateral fixed castors (7).

11. The trolley according to any one of Claims 8 to 10, **characterised in that** the middle fixed castors (8) are each supported on the supporting face (9a) of the stacking trough (9).

12. The trolley according to any one of Claims 1 to 11, **characterised in that** the baseplate (2) has on its top (1) a peripheral lip (2a) as a fixing stop for the transport container(s).

13. The trolley according to Claim 12, **characterised in that** the peripheral lip (2a) is equipped with drainage openings (2b) at the corners.

## Revendications

1. Chariot, notamment chariot de transport, destiné à recevoir un ou plusieurs conteneurs de transport, pourvu d'une plaque de fond (2) en matière plastique, pourvu par ailleurs de plusieurs roulettes (7, 8) raccordées sur la face inférieure de la plaque de fond (2) et pourvu sur sa face supérieure d'au moins une cavité d'empilage (9), destinée à recevoir au moins une roulette (7, 8) d'un autre chariot placé sur la face supérieure de la plaque de fond (2), la cavité d'empilage (9) comportant au moins un orifice de drainage (10),
**caractérisé en ce que**
la cavité d'empilage (9) est conçue sous la forme d'un creux longitudinal s'écoulant sur pratiquement tout le côté largeur de la plaque de fond (2) lacavité
d'empilage (9) étant équipée de deux orifices de drainage (10) placés de part et d'autre d'une surface d'appui (9a).

2. Chariot selon la revendication 1, **caractérisé en ce que** la surface d'appui (9a) sert pour une roulette (8) centrale.

3. Chariot selon l'une quelconque des revendications 1 ou 2, **caractérisé en ce que** la cavité d'empilage (9) comporte en direction de l'orifice de drainage (10) au moins une déclivité (11, 12).

4. Chariot selon la revendication 3, **caractérisé en ce que** plusieurs déclivités (11, 12) sont prévues.

5. Chariot selon l'une quelconque des revendications 1 à 4, **caractérisé en ce que** la plaque de fond (2) est fermée sur sa face supérieure à l'aide d'une plaque de sous-plancher (5).

6. Chariot selon la revendication 5, **caractérisé en ce que** la plaque de fond (2) et la plaque de sous-plancher (5) sont soudées l'une à l'autre.

7. Chariot selon la revendication 6, **caractérisé en ce que** les deux plaques (2, 5) sont réunies l'une à l'autre par un procédé de soudage au miroir.

8. Chariot selon l'une quelconque des revendications 1 à 7, **caractérisé en ce qu'**un total d'au moins trois paires (7, 8) de roulettes sont raccordées sur la face inférieure de la plaque de fond (2).

9. Chariot selon la revendication 8, **caractérisé en ce que** le trois paires (7, 8) de roulettes sont toutes conçues sous la forme de roulettes fixes.

10. Chariot selon la revendication 8 ou 9, **caractérisé en ce que** les roulettes (8) fixes centrales présentent un écart (A) entre leur surface de roulement et la face inférieure (5) de la plaque de fond (2) qui est supérieur à celui des deux roulettes (7) fixes latérales.

11. Chariot selon l'une quelconque des revendications 8 à 10, **caractérisé en ce que** les roulettes (8) fixes centrales s'appuient chacune sur la surface d'appui (9a) de la cavité d'empilage (9).

12. Chariot selon l'une quelconque des revendications 1 à 11, **caractérisé en ce que** la plaque de fond (2) comporte sur sa face supérieure (1) un bord périphérique (2a) en tant que butée de fixation pour le / les conteneurs de transport.

13. Chariot selon la revendication 12, **caractérisé en ce que** le bord périphérique (2a) est équipé sur ses angles d'orifices de drainage (2b).
